(19) **Europäisches Patentamt / European Patent Office / Office européen des brevets**

(11) **EP 4 018 383 B1**

(12) # EUROPEAN PATENT SPECIFICATION

(45) Date of publication and mention of the grant of the patent:
**11.02.2026 Bulletin 2026/07**

(21) Application number: **20781342.9**

(22) Date of filing: **25.09.2020**

(51) International Patent Classification (IPC):
**G06N 3/045** (2023.01) **G06N 3/084** (2023.01)
**G10L 13/02** (2013.01) **G10L 13/047** (2013.01)
**G10L 25/30** (2013.01) **G10L 25/45** (2013.01)
**G06N 3/047** (2023.01)

(52) Cooperative Patent Classification (CPC):
**G06N 3/084; G06N 3/045; G06N 3/0464; G06N 3/047; G06N 3/0475; G06N 3/09; G06N 3/094; G10L 13/02; G10L 13/047; G10L 25/30; G10L 25/45**

(86) International application number:
**PCT/EP2020/076908**

(87) International publication number:
**WO 2021/058746 (01.04.2021 Gazette 2021/13)**

(54) **HIGH FIDELITY SPEECH SYNTHESIS WITH ADVERSARIAL NETWORKS**

HIGH-FIDELITY-SPRACHSYNTHESE MIT KONTRADIKTORISCHEN NETZWERKEN

SYNTHÈSE VOCALE HAUTE FIDÉLITÉ AVEC DES RÉSEAUX ANTAGONISTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2019 US 201962905948 P**

(43) Date of publication of application:
**29.06.2022 Bulletin 2022/26**

(73) Proprietor: **GDM Holding LLC**
**Mountain View, CA 94043 (US)**

(72) Inventors:
- **BINKOWSKI, Mikolaj**
**London N1C 4AG (GB)**
- **SIMONYAN, Karen**
**London N1C 4AG (GB)**
- **DONAHUE, Jeffrey**
**London N1C 4AG (GB)**
- **CLARK, Aidan**
**London N1C 4AG (GB)**
- **DIELEMAN, Sander Etienne Lea**
**London N1C 4AG (GB)**
- **ELSEN, Erich Konrad**
**Mountain View, California 94043 (US)**

- **RUS, Luis Carlos Cobo**
**Mountain View, California 94043 (US)**
- **CASAGRANDE, Norman**
**London N1C 4AG (GB)**

(74) Representative: **Marks & Clerk GST**
**1 New York Street**
**Manchester M1 4HD (GB)**

(56) References cited:
- YANG SHAN ET AL: "Statistical parametric speech synthesis using generative adversarial networks under a multi-task learning framework", 2017 IEEE AUTOMATIC SPEECH RECOGNITION AND UNDERSTANDING WORKSHOP (ASRU), IEEE, 16 December 2017 (2017-12-16), pages 685 - 691, XP033306905, [retrieved on 20180124], DOI: 10.1109/ASRU.2017.8269003
- HAOHAN GUO ET AL: "A New GAN-based End-to-End TTS Training Algorithm", ARXIV.ORG, CORNELL UNIVERSITY LIBRARY, 201 OLIN LIBRARY CORNELL UNIVERSITY ITHACA, NY 14853, 9 April 2019 (2019-04-09), XP081167160

- **KOU TANAKA ET AL: "WaveCycleGAN2: Time-domain Neural Post-filter for Speech Waveform Generation", ARXIV.ORG, CORNELL UNIVERSITY LIBRARY, 201 OLIN LIBRARY CORNELL UNIVERSITY ITHACA, NY 14853, 5 April 2019 (2019-04-05), XP081165319**
- **YANG AI ET AL: "A Neural Vocoder With Hierarchical Generation of Amplitude and Phase Spectra for Statistical Parametric Speech Synthesis", IEEE/ACM TRANSACTIONS ON AUDIO, SPEECH, AND LANGUAGE PROCESSING, vol. 28, 23 June 2019 (2019-06-23), USA, pages 839 - 851, XP055768381, ISSN: 2329-9290, DOI: 10.1109/TASLP.2020.2970241**

**Description**

BACKGROUND

This specification relates to generating audio data using adversarial neural networks.

Neural networks are machine learning models that employ one or more layers of nonlinear units to predict an output for a received input. Some neural networks include one or more hidden layers in addition to an output layer. The output of each hidden layer is used as input to one or more other layers in the network, i.e., one or more other hidden layers, the output layer, or both. Each layer of the network generates an output from a received input in accordance with current values of a respective set of parameters. H. Guo et al., "A New GAN-based End-to-End TTS Training Algorithm", arXiv:1904.04775 (2019), proposes to use a Generative Adversarial Network along with Professor Forcing in training.

SUMMARY

An aspect of the present disclosure provides a method of training a feedforward generative neural network according to claim 1. Another aspect of the present disclosure provides a system comprising one or more computers and one or more storage devices according to claim 14. A further aspect of the present disclose provides one or more non-transitory computer storage media according to claim 15.

This specification describes a system implemented as computer programs on one or more computers in one or more locations that generates output audio examples using a generative neural network. The generative neural network has been configured through training to receive a network input that includes a conditioning input that characterizes an input text. The generative neural network processes the conditioning input to generate audio data corresponding to the input text, e.g., audio data characterizing a speaker speaking the input text.

This specification also describes a training system for training the generative neural network. Generally, the training system trains the generative neural network in an adversarial manner using a group of one or more discriminator neural networks. That is, each of the discriminator neural networks processes audio examples generated by the generative neural network and predicts whether the audio example is a real (e.g., a recording of a human speaker) or synthetic example of audio data, i.e., whether or not the audio example was generated by the generative neural network. In this specification, a discriminator neural network is also called simply a "discriminator."

The group of discriminators includes both conditional discriminators and unconditional discriminators. Conditional discriminators process both the audio example and the conditioning text input to generate a prediction, while unconditional discriminators process only the audio example, and not the conditioning text input, to generate a prediction. In some implementations, each discriminator randomly samples a different portion of the audio example and processes the random sample to generate a prediction.

The training system can combine the respective predictions of the group of discriminators to generate a combined prediction, and update the parameters of both the feedforward generative neural network and each of the discriminators based on an error of the combined prediction.

The subject matter described in this specification can be implemented in particular embodiments so as to realize one or more of the following advantages.

The generative neural network is a feedforward generative neural network. That is, the generative neural network can process the network input to generate the output audio example in a single forward pass. A feedforward generative neural network as described in this specification can generate output examples faster than existing techniques that rely on autoregressive generative neural networks. Autoregressive neural networks generate output examples across multiple time steps by performing a forward pass at each time step. At a given time step, the autoregressive neural network generates a new output sample to be included in the output audio example, conditioned on the output samples that have already been generated. This process can consume a large amount of computational resources and take a large amount of time. A feedforward generative neural network, on the other hand, can generate output examples in a single forward pass while maintaining a high degree of quality of the generated output examples. This greatly reduces the time and amount of computational resources required to generate the output audio example.

Other existing techniques rely on invertible feedforward neural networks that are trained by distilling an autoregressive model using probability density. Training in this way allows the invertible feedforward neural networks to generate speech signals that sound realistic and correspond to input text without having to model every possible variation that occurs in the data. A feedforward generative neural network as described in this specification can also generate realistic audio samples that adhere faithfully to input text without having to explicitly model the data distribution of the audio data, but can do so without the distillation and invertibility requirements of invertible feedforward neural networks.

Using both conditional and unconditional discriminators provides various advantages to a feedforward generative neural network as described in this specification. Conditional discriminators can analyze how well the generated audio corresponds to the input text that is characterized by the conditioning text input, allowing the feedforward generative neural network to learn to generate audio examples that adhere to the input text. However, as described in more detail below, the endpoints of the random samples taken by conditional discriminators need to be aligned with the input time steps of the conditioning text input in order for the conditional discriminators to evaluate both the conditioning text input (at the frequency of the input time steps of the conditioning text input) and the generated audio (at the frequency of the output time steps of the audio example). As a particular example, if each input time step corresponds to 120 output time steps, then the sampling that the conditional discriminators can perform is constrained to a 120-times lower frequency. Unconditional discriminators, on the other hand, are not limited to such sampling frequency constraints, and thus are exposed to more diverse audio samples.

Using discriminators that only process samples of the audio data can allow the system to discriminate between lower-dimensional distributions. Assigning each discriminator a particular window size can allow the discriminators to operate on different frequencies of the audio samples, increasing the realism of the audio samples generated by the feedforward generative neural networks. Using discriminators that only process samples of the audio data can also reduce the computational complexity of the discriminators, which can allow the system to train the feedforward generative neural network faster.

Using dilated convolutional neural network layers can further broaden the receptive fields of the feedforward generative neural network and the discriminators, allowing the respective networks to learn dependencies in the audio examples at various frequencies, e.g. both long-term and short term frequencies.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example training system for training a generative neural network.
FIG. 2 is a diagram of an example generator block.
FIG. 3 is a diagram of an example discriminator neural network system.
FIG. 4 is a diagram of an example unconditional discriminator block and an example conditional discriminator block.
FIG. 5 is a flow diagram of an example process for training a generative neural network.

Like reference numbers and designations in the various drawings indicate like elements.

DETAILED DESCRIPTION

This specification describes a system that trains a generative neural network to generate output audio examples using conditioning text inputs. The system can train the generative neural network in an adversarial manner using a discriminator neural network system that includes one or more discriminators.

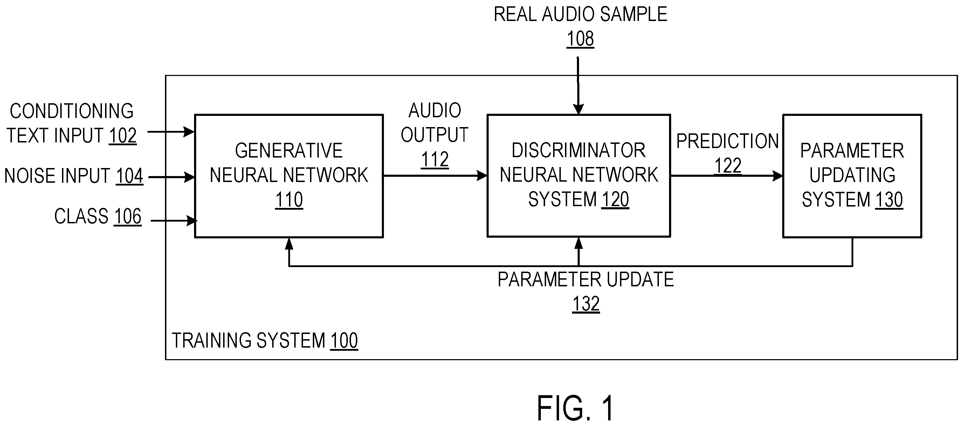

FIG. 1 is a diagram of an example training system 100 for training a generative neural network 110. The training system 100 is an example of a system implemented as computer programs on one or more computers in one or more locations, in which the systems, components, and techniques described below can be implemented.

The training system 100 includes a generative neural network 110, a discriminator neural network system 120, and a parameter updating system 130. The training system 100 is configured to train the generative neural network 110 to receive a conditioning text input 102 and to process the conditioning text input 102 to generate an audio output 112. The generative neural network 110 is a feedforward neural network, i.e., the generative neural network 110 generates the audio output 112 in a single forward pass.

The conditioning text input 102 characterizes an input text, and the audio output 112 depicts speech corresponding to the input text. In some implementations, the conditioning text input 102 includes the input text itself, e.g., character-level or word-level embeddings of the input text. Instead or in addition, the conditioning text input can include linguistic features characterizing the text input. For example, the conditioning text input can include a respective vector of linguistic features for each input time step in a sequence of input time steps. As a particular example, the linguistic features for each input time step can include i) a phoneme and ii) a duration of the text at the input time step. The linguistic features can also include pitch information; for example, the pitch can be represented by a logarithmic fundamental frequency $\log F_0$ of the input time step.

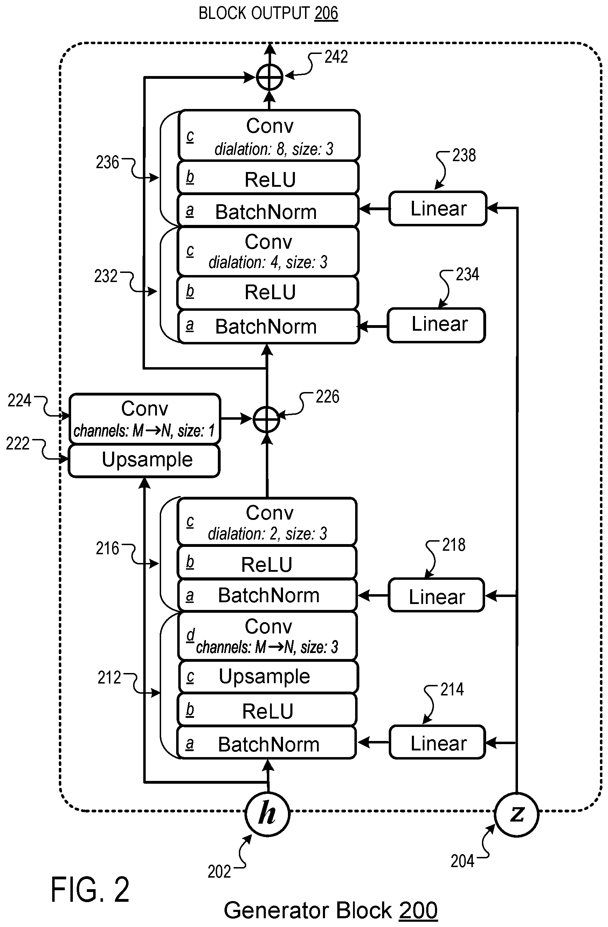

The generative neural network 110 can have any appropriate neural network architecture. As a particular example, the generative neural network 110 can include a sequence of groups of convolutional neural network layers, called "generator blocks." The first generator block in the sequence of generator blocks can receive as input the conditioning text input (or an embedding of the conditioning text input) and generate a block output. Each subsequent generator block in the sequence of generator blocks can receive as input the block output generated by the previous generator block in the sequence of generator blocks and generate a subsequent block output. Generator blocks are described in more detail below with respect to FIG. 2.

In some implementations, the generative neural network 110 can also receive as input a noise input 104. For example, the noise input 104 can be randomly sampled from a predetermined distribution, e.g., a normal distribution. The noise input 104 can ensure variability in the audio output 112.

In some implementations, the generative neural network 110 can also receive as input an identification of a class 106 to which the audio output 112 should belong. The class 106 can be a member of a set of possible classes. For example, the class 106 can correspond to a particular speaker that the audio output 112 should sound like. That is, the audio output 112 can depict the particular speaker speaking the input text.

The audio output 112 can include an audio sample of an audio wave at each output time step in a sequence of output time steps. For example, the audio output 112 can include, for each output time step, an amplitude value of the audio wave. In some implementations, the amplitude value can be a compressed or companded amplitude value.

Generally, the sequence of input time steps and the sequence of output time steps characterize the same period of time, e.g., 1, 2, 5, or 10 seconds. As a particular example, if the period of time is 2 seconds, then the conditioning input 102 can include 400 input time steps (resulting in a frequency of 200Hz), while the audio output 112 can include 48,000 time steps (resulting in a frequency of 24 kHz). Thus, the generative neural network 110 can generate audio samples for multiple output time steps (in this case, 120) for each single input time step.

In some implementations in which the generative neural network 110 includes a sequence of one or more generator blocks, because of the difference in frequencies of the input time steps and the output time steps, one or more of the generator blocks in the generative neural network 110 can include one or more respective upsampling layers. A dimensionality of the layer output of each upsampling layer is larger than a dimensionality of the layer input of the upsampling layer. The total degree of upsampling across all generator blocks in the generative neural network 110 can be proportional to the ratio of frequencies of the output time steps and the input time steps.

After the generative neural network 110 generates an audio output 112, the training system 100 can provide the audio output 112 to the discriminator neural network system 120. The training system 100 can train the discriminator neural network system 120 to process an audio sample and to generate a prediction 122 of whether the audio sample is real, i.e., an audio sample captured in the real world, or synthetic, i.e., an audio sample that has been generated by the generative neural network 110.

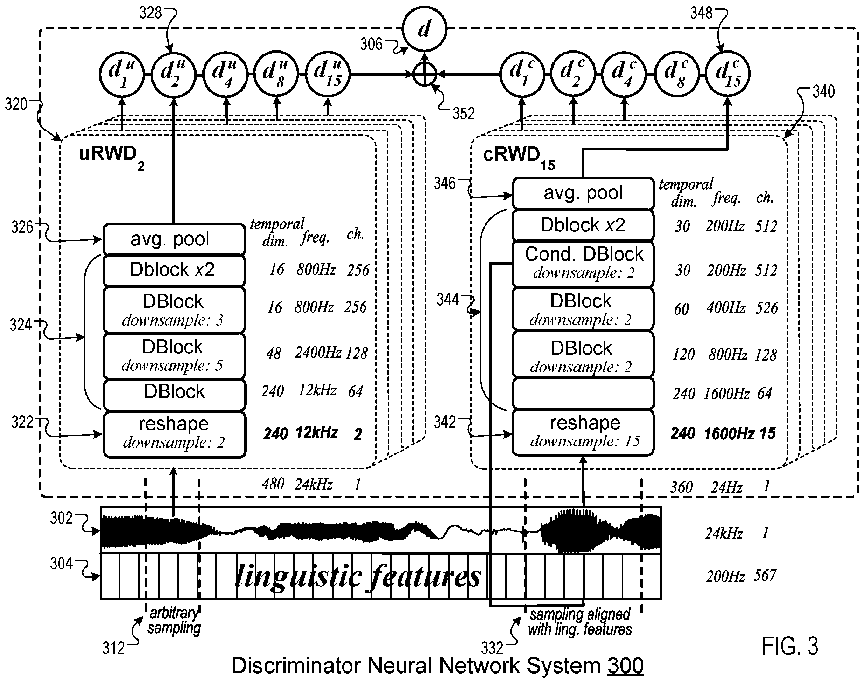

The discriminator neural network system 120 can have any appropriate neural network architecture. As a particular example, the discriminator neural network system 120 can include one or more discriminators that each process the audio output 112 and predict whether the audio output 112 is real or synthetic. Each discriminator can include a sequence of groups of convolutional neural network layers, called "discriminator blocks." Example discriminator blocks are described below with respect to FIG. 3.

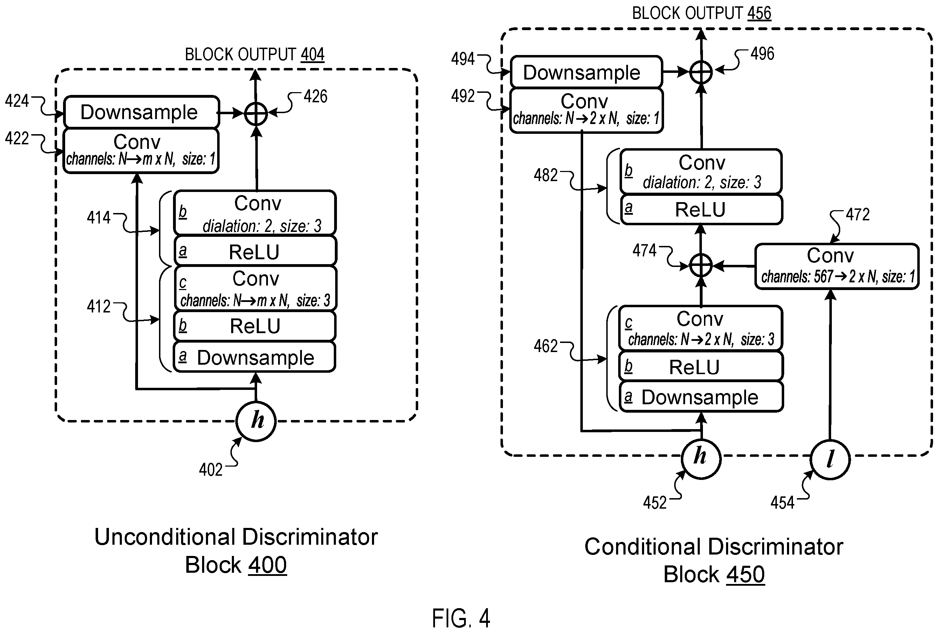

The one or more discriminators of the discriminator neural network system 120 include one or more conditional discriminators and one or more unconditional discriminators. The conditional discriminators receive as input i) the audio output 112 generated by the generative neural network 110 and ii) the conditioning text input 102 that the generative neural network 110 used to generate the audio output 112. The unconditional discriminators receive as input the output audio 112 generated by the generative neural network 110, but do not receive as input the conditioning text input 102. Thus, the conditional discriminators can measure how well the audio output 112 corresponds to the input text characterized by the conditioning text input 102 in addition to measuring the general realism of the audio output 112, whereas the unconditional discriminators only measure the general realism of the audio output 112. An example discriminator neural network system is described in more detail below with respect to FIG. 4.

The discriminator neural network system 120 can combine the respective predictions of the one or more discriminators to generate the prediction 122.

The parameter updating system 130 can obtain the prediction 122 generated by the discriminator neural network system 120 and determine a parameter update 132 according to an error in the prediction 122. The training system can apply the parameter update 132 to the parameters of the generative neural network 110 and the discriminator neural network system 120. That is, the training system 100 can train the generative neural network 110 and the discriminators in the discriminator neural network system 120 concurrently.

Generally, the parameter updating system 130 determines the parameter update 132 to the parameters of the generative neural network 110 in order to increase the error in the prediction 122. For example, if the discriminator neural network system 120 correctly predicted that the audio output 112 is synthetic, then the parameter updating system 130 generates a parameter update 132 to the parameters of the generative neural network 110 in order to improve the realism of the audio output 112 so that the discriminator neural network system 120 might incorrectly predict the next audio output 112 to be real.

Conversely, the parameter updating system 130 determines the parameter update 132 to the parameters of the discriminator neural network system 120 in order to decrease the error in the prediction 122. For example, if the discriminator neural network system 120 incorrectly predicted that the audio output 112 is real, then the parameter updating system 130 generates a parameter update 132 to the parameters of the discriminator neural network system 120 in order to improve the predictions 122 of the discriminator neural network system 120.

In some implementations in which the discriminator neural network system 120 includes multiple different discriminators, the parameter updating system 130 determines a parameter update 132 for each discriminator using the prediction 122 output by the discriminator neural network system 120. That is, the parameter updating system 130 determines a parameter update 132 for each particular discriminator using the same combined prediction 122 that was generated by combining the respective predictions of the multiple discriminators, regardless of the respective prediction generated by the particular discriminator.

In some other implementations in which the discriminator neural network system 120 includes multiple different discriminators, the parameter updating system 130 determines a parameter update 132 for each discriminator using the respective prediction generated by the discriminator. That is, the parameter updating system 130 generates the parameter update 132 for a particular discriminator in order to improve the respective prediction generated by the particular discriminator (which will indirectly improve the combined prediction 122 output by the discriminator neural network system 120 because the combined prediction 122 is generated according to the respective predictions generated by the multiple discriminators).

During training, the training system 100 can also provide real audio samples 108 to the discriminator neural network system 120. Each discriminator in the discriminator neural network system 120 can process the real audio sample 108 to predict whether the real audio sample 108 is a real or synthetic example of audio data. Again, the discriminator neural network system 120 can combine the respective predictions of each of the discriminators to generate a second prediction 122. The parameter updating system 130 can then determine a second parameter update 132 to the parameters of discriminator neural network system 120 according to an error in the second prediction 122. Generally, the training system 100 does not use the second prediction corresponding to the real audio sample 108 to update the parameters of the generative neural network 110.

In some implementations in which the generative neural network 110 has been trained to generate synthetic audio outputs 112 that belong to a class 106, the discriminator neural network system 120 does not receive as input an identification of a class 106 to which a received (real or synthetic) audio example belongs. However, the real audio samples 108 received by the discriminator neural network system 120 can include audio samples that belong to each of the classes 106 in the set of classes.

As a particular example, parameter updating system 130 can use the Wasserstein loss function to determine the parameter update 132, which is:

$$D(x) - D\big(G(z)\big),$$

where $D(x)$ is the likelihood assigned by the discriminator neural network system 120 that a real audio sample 108 is real, $G(z)$ is a synthetic audio output 112 generated by the generative neural network 110, and $D(G(z))$ is the likelihood assigned by the discriminator neural network system 120 that the synthetic audio output 112 is real. The objective of the generative neural network 110 is to minimize Wasserstein loss by maximizing $D(G(z))$, i.e. by causing the discriminator neural network system 120 to predict that a synthetic audio output 112 is real. The objective of the discriminator neural network system 120 is to maximize Wasserstein loss, i.e. correctly predict both real and synthetic audio examples.

As another particular example, the parameters updating system 130 can use the following loss function:

$$\log\big(D(x)\big) + \log\Big(1 - D\big(G(z)\big)\Big)$$

where again the objective of the generative neural network 110 is to minimize the loss and the objective of the discriminator neural network system 120 is to maximize the loss.

The training system 100 can backpropagate the loss through both the generative neural network 110 and the discriminator neural network system 120, thus training both networks concurrently.

FIG. 2 is a diagram of an example generator block 200. The generator block 200 can be a component of a generator neural network, e.g., the generator neural network 110 depicted in FIG. 1, that is configured to process a conditioning text input and to generate an audio output. The generator neural network can include a sequence of generator blocks. In some implementations, each generator block in the sequence of generator blocks has the same architecture. In some other implementations, one or more generator blocks have a different architecture than the other generator blocks in the sequence of generator blocks.

The generator block is configured to receive as input i) a block input 202 and ii) a noise input 204 and to generate a block output 206. In implementations in which the generator neural network also receives as input an identification of a class to which the audio output should belong, one or more generator blocks of the generator neural network can also receive the identification of the class as input; for simplicity, this is omitted from FIG. 2.

In some implementations, the first generator block in the sequence of generator blocks receives the conditioning text input as the block input 202. In some other implementations, the first generator block in the sequence of generator blocks receives an embedding of the conditioning text input generated by one or more initial neural network layers of the generator neural network. Each subsequent generator block in the sequence of generator blocks receives, as the block input 202, the block output generated by the previous generator block in the sequence of generator blocks.

Table 1: Example Generator Neural Network Architecture

| Layer | Time Dimension | Frequency | Num. of Channels |
|---|---|---|---|
| Linguistic features | 400 | 200Hz | 567 |
| Input Conv. Layer | 400 | 200Hz | 768 |
| G-Block | 400 | 200Hz | 768 |
| G-Block | 400 | 200Hz | 768 |
| G-Block, upsample x2 | 800 | 400Hz | 384 |
| G-Block, upsample x2 | 1600 | 800Hz | 384 |
| G-Block, upsample x2 | 3200 | 1600Hz | 384 |
| G-Block, upsample x3 | 9600 | 4800Hz | 192 |
| G-Block, upsample x5 | 48000 | 24kHz | 96 |
| Output Conv. Layer | 48000 | 24kHz | 1 |

Table 1 describes an example architecture of a generator neural network. The example shown in Table 1 is for illustrative purposes only, and many different configurations of generator neural networks are possible. The input to the generator neural network is a vector of linguistic features for each input time step of 400 input time steps that correspond to two seconds of audio (a frequency of 200Hz). Each vector of linguistic features corresponding to a respective input time step includes 567 channels.

The generator neural network includes an input convolutional neural network layer that generates an embedding of the linguistic features to provide to the first generator block in the sequence of generator blocks. The input convolutional neural network layer increases the number of channels for each time step from 567 to 768. In some implementations, the generator neural network has multiple input neural network layers.

The generator neural network includes seven generator blocks ("G-Blocks"), although in general a generator neural network can include any number of generator blocks. The first two generator blocks do not include any upsampling layers, and so the time dimensionality of the block outputs are the same as the block inputs. The next three generator blocks each upsample their respective block inputs by 2x, so that the block output of the fifth generator block has a time dimensionality of 3200 (at a frequency of 1600Hz). The sixth generator block upsamples its block input by 3x, generating a block output that has a time dimensionality of 9600 (at a frequency of 4800 Hz). The final generator block upsamples its block input by 5x, generating a block output that has a time dimensionality of 48000 (at a frequency of 24kHz). The sequence of generator blocks also decreases the number of channels for each time step from 768 to 96.

The generator neural network includes an output convolutional neural network layer that processes the block output of the final generator block in the sequence of generator blocks and generates the audio output of the generator neural network. The audio output includes 48000 output time steps, and each output time step has a single channel representing the amplitude of the audio wave at the output time step. In some implementations, the output convolutional neural network layer includes an activation function, e.g., the Tanh activation function. In some implementations, the generator neural network has multiple output neural network layers.

Referring back to FIG. 2, the generator block 200 processes the block input 202 using a first stack 212 of neural network layers. The first stack 212 of neural network layers includes a batch normalization layer 212a, an activation layer 212b, an upsampling layer 212c, and a convolutional neural network layer 212d.

In some implementations, the batch normalization layer 212a is a conditional batch normalization layer that is conditioned according to the noise input 204. For example, the conditional batch normalization layer 212a can be conditioned on a linear embedding of the noise input 204 generated by a linear layer 214 of the generator block 200. In some implementations, the linear layer 214 combines, e.g., concatenates, i) the linear embedding of the noise input 204 and ii) an identification of a class to which the output audio should belong (e.g., a particular speaker that the output audio should sound like) to generate a combined representation and provide the combined representation to the conditional batch normalization layer 212a. For example, the class identification can be encoded as a one-hot vector, i.e., a vector whose elements all have value 0 except a single element corresponding to the particular class that has a value of 1. The conditional batch normalization layer 212a can then condition on the combined representation.

In some implementations, the activation layer 212b can be a ReLU activation layer.

For generator blocks that upsample the block input 202, e.g., the final five generator blocks listed in Table 1, the upsampling layer 212c upsamples the output of the activation layer by the corresponding upsampling factor $p$. That is, the upsampling layer 212c generates a layer output that is p-times as large as the layer input in the time dimension. For example, the upsampling layer 212c can generate a layer output that includes, for each element of the layer input, p consecutive copies of the layer input. As another example, the upsampling layer 212c can linearly interpolate each pair of consecutive elements in the layer input to generate $(p - 1)$ respective additional elements in the layer output. As another example, the upsampling layer 212c can perform higher-order interpolation on the elements of the layer input to generate the layer output. Although the generator block 200 depicted in FIG. 2 has a single upsampling layer 212c, in general a generator block can have any number of upsampling layers throughout the generator block.

The convolutional neural network layer 212d processes a layer input that includes $M$ channels for each element and generates a layer output that includes $N$ channels for each output. $M$ corresponds to the number of channels in the block input 202 and $N$ corresponds to the number of channels in the block output 206. In some cases, $M = N$. Although the example depicted in FIG. 2 shows the first convolutional neural network layer 212d of the generator block 200 processing a layer input having $M$ channels to generate a layer output having $N$ channels while each subsequent convolutional neural network layer preserves the number of channels, in general any one or more of the convolutional layers of a generator block can change the number of channels to yield a block output having $N$ channels.

The generator block 200 includes a second stack 216 of neural network layers that processes the output of the first stack 212 of neural network layers. The second stack 216 of neural network layers includes a batch normalization layer 216a, an activation layer 216b, and a convolutional neural network layer 216c.

As described above, the batch normalization layer 216a can be a conditional batch normalization layer conditioned on a linear embedding of the noise input 204 generated by a linear layer 218. Generally, each linear layer 214, 218, 234, and 238 of the generator block 200 have different parameters and therefore generate different linear embeddings of the noise input 204.

The generator block 200 includes a first skip connection 226 that combines the input to the first stack 212 of neural network layers with the output of the second stack 216 of neural network layers. For example, the first skip connection 226 can add or concatenate the input to the first stack 212 of neural network layers and the output of the second stack 216 of neural network layers.

In cases where the first stack 212 or the second stack 216 of neural network layers includes an upsampling layer, e.g., the upsampling layer 212c, the generator block can include another upsampling layer 222 before the first skip connection 226, so that the two inputs to the first skip connection 226 have the same dimensionality.

In cases where the first stack 212 or the second stack 216 of neural network layers includes a convolutional neural network layer that changes the number of channels of the layer input, e.g., the convolutional neural network layer 212d, the generator block can include another convolutional neural network layer 224 before the first skip connection 226, so that the two inputs to the first skip connection 226 have the same number of channels.

The generator block 200 includes a third stack 232 of neural network layers that processes the output of the first skip connection 226. The third stack 232 of neural network layers includes a batch normalization layer 232a, an activation layer 232b, and a convolutional neural network layer 232c. As described above, the batch normalization layer 232a can be a conditional batch normalization layer conditioned on a linear embedding of the noise input 204 generated by a linear layer 234.

The generator block 200 includes a fourth stack 236 of neural network layers that processes the output of the third stack 232 of neural network layers. The fourth stack 236 of neural network layers includes a batch normalization layer 236a, an activation layer 236b, and a convolutional neural network layer 236c. As described above, the batch normalization layer 236a can be a conditional batch normalization layer conditioned on a linear embedding of the noise input 204 generated by a linear layer 238.

The generator block 200 includes a second skip connection 242 that combines the input to the third stack 232 of neural network layers and the output of the fourth stack of neural network layers, e.g., by addition or concatenation. The block output 206 of the generator block 200 is the output of the second skip connection 242.

In some implementations, one or more of the convolutional neural network layers of the generator block 200 are dilated convolutional neural network layers. A dilated convolutional neural network layer is a convolutional layer where the filter is applied over an area larger than the length of the filter by skipping input values with a certain step that is defined by the dilation value for the dilated convolution. In some implementations, the generator block 200 can include multiple dilated convolutional neural network layers with increasing dilation. For example, the dilation value can double for each dilated convolutional neural network layer starting from an initial dilation, and then return to the initial dilation in the next generator block. In the example depicted in FIG. 2, the first convolutional neural network layer 212d has a dilation value of 1, the second convolutional neural network layer 216c has a dilation value of 2, the third convolutional neural network layer 232c has a dilation value of 4, and the fourth convolutional neural network layer 236c has a dilation value of 8.

FIG. 3 is a diagram of an example discriminator neural network system 300. The discriminator neural network system 300 can be a component of a training system e.g., the training system 100 depicted in FIG. 1, that is configured to train a generator neural network. The discriminator neural network system 300 has been trained to receive an audio example 302 and generate a prediction 306 of whether the audio example is a real audio example or a synthetic audio example generated by the generator neural network. The audio example can include a respective amplitude value at each output time step in a sequence of output time steps (called "output" time steps because the audio example might have been the output of the generator neural network). The audio example corresponds to a conditioning text input 304 that includes a respective vector of linguistic features at each input time step in a sequence of input time steps. Note that even if the audio example 302 is a real audio example, the conditioning text input 304 still corresponds to the audio example 302.

The discriminator neural network system 300 can include one or more unconditional discriminators, one or more conditional discriminators, or both. In the example depicted in FIG. 3, the discriminator neural network system 300 includes five unconditional discriminators, including unconditional discriminator 320, and five conditional discriminators, including conditional discriminator 340.

In some implementations, instead of processing the entire audio example 302, each of the discriminators in the discriminator neural network system 300 processes a different subset of the audio example. For example, each of the discriminators can randomly sample a subset of the audio example 302. That is, each discriminator only processes the amplitudes of a sub-sequence of consecutive output time steps of the audio example 302, wherein the sub-sequence of consecutive output time steps is randomly sampled from the entire sequence of output time steps. In some implementations, the size of the random sample, i.e., the number of output time steps sampled, is the same for each discriminator. In some other implementations, the size of the random sample is different for each discriminator, and is called the "window size" of the discriminator.

In some implementations, one or more of the discriminators in the discriminator neural network system 300 can have the same network architecture and the same parameter values. For example, a training system can update the one or more discriminators in the same way during training of the discriminator neural network system.

In some implementations, different discriminators have different window sizes. For example, for each window size in a set of multiple window sizes, the system can include one conditional discriminator with the window size and one unconditional discriminator with the window size. As a particular example, the discriminator neural network 300 includes one conditional discriminator and one unconditional discriminator corresponding to each window size in a set of five window sizes (240, 480, 960, 1920, and 3600 output time steps).

Each conditional discriminator also obtains a sample of the conditioning text input 304 corresponding to the random sample of the audio example 302 obtained by the conditional discriminator. Because the sample of the audio example 302 and the sample of the conditioning text input 304 must align, conditional discriminators can be constrained to sample a sub-sequence of the audio output 302 that begins at the same point that an input time step of the conditioning text input 304 begins. That is, because the number of input time steps in the conditioning text input 304 is less than the number of output time steps in the audio example 302, each conditional discriminator can be constrained to sample the audio example 302 at a point that aligns with an input time step of the conditional text input 304. Because unconditional discriminators do not process the conditioning text input 304, unconditional discriminators do not have this constraint.

In some implementations, before processing a random sample of the audio example 302, each discriminator first downsamples the random sample by a factor proportional to the window size of the discriminator using a "reshaping" layer. Downsampling effectively allows discriminators with different window sizes to process the audio example 302 at different frequencies, where the frequency that a particular discriminator operates on is proportional to the window size of the particular discriminator. Downsampling by a factor proportional to the window size also allows each downsampled representation to have a common dimensionality, which allows each of the discriminators to have a similar architecture and similar computational complexity despite having different window sizes. In the example depicted in FIG. 3, the common dimensionality is 240 time steps; each discriminator is labeled with the factor k by which the discriminator downsamples its random sample (1, 2, 4, 8, and 15 respectively).

In some implementations, the discriminators downsample the respective random sample of the audio example 302 using a strided convolutional neural network layer.

The unconditional discriminator 320 randomly samples a sample 312 that includes 480 output time steps from the audio example 302. The unconditional discriminator 320 includes a reshaping layer 322 that downsamples the random sample 312 by 2x to generate a network input that includes 240 time steps.

The unconditional discriminator 320 includes a sequence 324 of discriminator blocks ("DBlocks"). Although the unconditional discriminator 320 is depicted as including five discriminator blocks, in general an unconditional discriminator can have any number of discriminator blocks. Each discriminator block in the unconditional discriminator 320 is an unconditional discriminator block. An example unconditional discriminator block is described below with respect to FIG. 4.

The first discriminator block in the sequence 324 of discriminator blocks is configured to receive the network input from the reshaping layer 322 and to process the network input to generate a block output. Each subsequent discriminator block in the sequence 324 of discriminator blocks is configured to receive as input the block output generated by the previous discriminator block in the sequence 324 and to generate a subsequent block output.

In some implementations, one or more discriminator blocks in the unconditional discriminator 320 performs further downsampling. For example, as depicted in FIG. 3, the second discriminator block in the sequence 324 of discriminator blocks downsamples by 5x, while the third discriminator block in the sequence 324 downsamples by 3x. Generally, downsampling helps the unconditional discriminator 320 limit the dimensionality of internal representations, increasing efficiency and allowing the unconditional discriminator 320 to learn relationships between more distant elements of the sample 312 of the audio example 302. In some implementations, the number of downsampling layers in a respective unconditional discriminator and the degree of downsampling performed by the respective unconditional discriminator depends on the factor k of the respective unconditional discriminator.

The unconditional discriminator 320 includes an output layer 326 that receives as input the block output of the final discriminator block in the sequence 324 of discriminator blocks and generates a prediction 328. The prediction 328 predicts whether the audio example is a real or synthetic audio example. For example, the output layer 326 can be an average pooling layer that generates a scalar that characterizes a likelihood that the audio example 302 is a real audio example, where a larger scalar value indicates a higher confidence that the audio example 302 is real.

The conditional discriminator 340 randomly samples a sample 332 that includes 3600 output time steps from the audio example 302. The conditional discriminator 340 includes a reshaping layer 342 that downsamples the random sample 332 by 15x to generate a network input that includes 240 time steps.

The conditional discriminator 340 includes a sequence 344 of discriminator blocks. Although the conditional discriminator 340 is depicted as including five unconditional discriminator blocks and one conditional discriminator block, in general a conditional discriminator can have any number of conditional and unconditional discriminator blocks.

The first discriminator block in the sequence 344 of discriminator blocks is configured to receive the network input from the reshaping layer 342 and to process the network input to generate a block output. Each subsequent discriminator block in the sequence 344 of discriminator blocks is configured to receive as input the block output generated by the previous discriminator block in the sequence 344 and to generate a subsequent block output.

The conditional discriminator block is configured to receive as input both i) the block output of the previous discriminator block in the sequence 344 and ii) a sample of the conditioning text input 304 corresponding to the sample 332 of the audio example. An example conditional discriminator block is described below with respect to FIG. 4.

Because of the difference in frequencies of the output time steps and the input time steps, one or more of the unconditional discriminator blocks preceding the conditional discriminator block in the sequence 344 of discriminator blocks and/or the conditional discriminator block itself can perform downsampling. For example, the total degree of downsampling across all discriminator blocks in the conditional discriminator 340 can be proportional to the ratio of frequencies of the input time steps and the output time steps. In the example depicted in FIG. 3, the conditional discriminator 340 downsamples the network input by 8x to reach a frequency of 200Hz, which is the same frequency as the conditioning text input.

The conditional discriminator 340 includes an output layer 346 that receives as input the block output of the final discriminator block in the sequence 344 of discriminator blocks and generates a prediction 348 of whether the audio example is a real or synthetic audio example. For example, the output layer 346 can be an average pooling layer that generates a scalar that characterizes a likelihood that the audio example 302 is a real audio example.

After each discriminator in the discriminator neural network system 300 generates a prediction, the discriminator neural network system 300 can combine the respective predictions to generate a final prediction 306 of whether the audio example is a real or synthetic audio example. For example, the discriminator neural network system 300 can determine a sum or average of the respective predictions of the discriminators. As another example, the discriminator neural network system 300 can generate the final prediction 306 according to a voting algorithm, e.g., predicting that the audio example 302 is a real audio example if and only if the majority of discriminators predicted the audio example 302 to be a real audio example.

Note that the discriminator neural network system 300 does not receive as input a class associated with the audio input. However, in some implementations, the discriminator neural network system 300 can do so, e.g., as a further conditioning input to the conditioning discriminator block of each conditional discriminator.

FIG. 4 is a diagram of an example unconditional discriminator block 400 and an example conditional discriminator block 450. The discriminator blocks 400 and 450 can be components of a discriminator neural network system, e.g., the discriminator neural network system 120 depicted in FIG. 1. The discriminator neural network system can include one or more discriminators, and each discriminator can include a sequence of one or more discriminator blocks. In some implementations, each discriminator block in the sequence of discriminator blocks in a discriminator has the same architecture. In some other implementations, one or more discriminator blocks have a different architecture than the other discriminator blocks in the sequence of discriminator blocks in a discriminator.

The unconditional discriminator block 400 can be a component of one or more unconditional discriminators, one or more conditional discriminators, or both. The conditional discriminator block 450 can only be a component of one or more conditional discriminators. That is, a conditional discriminator can include an unconditional discriminator block, but an unconditional discriminator cannot include a conditional discriminator block.

The unconditional discriminator block 400 is configured to receive a block input 402 and to generate a block output 404. In some implementations, if the unconditional discriminator block 400 is the first discriminator block in the sequence of discriminator blocks of a discriminator, then the block input 402 is an audio example. In some other implementations, if the unconditional discriminator block 400 is the first discriminator block in the sequence of discriminator blocks of a discriminator, then the block input 402 is an embedding of the audio example, e.g., an embedding generated by an input convolutional neural network layer of the discriminator. If the unconditional discriminator block 400 is not the first discriminator block in the sequence, then the block input 402 can be the block output of the previous discriminator block in the sequence.

The unconditional discriminator block 400 includes a first stack 412 of neural network layers that includes a downsampling layer 412a, an activation layer 412b, and a convolutional neural network layer 412c.

For unconditional discriminator blocks that downsample the block input 402, e.g., the second and third discriminator blocks in the sequence 324 of discriminator blocks depicted in FIG. 3, the downsampling layer 412a downsamples the block input 402 by the corresponding downsampling factor. Although the unconditional discriminator block 400 depicted in FIG. 4 has a single downsampling layer 412a, in general an unconditional discriminator block can have any number of downsampling layers throughout the unconditional discriminator block.

In some implementations, the activation layer 412b can be a ReLU activation layer.

The convolutional neural network layer 412c processes a layer input that includes $N$ channels for each element and generates a layer output that includes $m \cdot N$ channels for each element. $N$ corresponds to the number of channels in the block input 202 and $m$ corresponds to a multiplier. In some cases, $m = 1$. In general any one or more of the convolutional layers of an unconditional discriminator block can change the number of channels of the layer input.

The unconditional discriminator block 400 includes a second stack 414 of neural network layers that processes the output of the first stack 412 of neural network layers. The second stack 414 of neural network layers includes an activation layer 414a and a convolutional neural network layer 414b.

The unconditional discriminator block 400 includes a skip connection 426 that combines the input to the first stack 412 of neural network layers with the output of the second stack 414 of neural network layers. For example, the skip connection 426 can add or concatenate the input to the first stack 412 of neural network layers and the output of the second stack 414 of neural network layers.

In cases where the first stack 412 or the second stack 414 of neural network layers includes a convolutional neural network layer that changes the number of channels of the layer input, e.g., the convolutional neural network layer 412c, the unconditional discriminator block can include another convolutional neural network layer 422 before the skip connection 426, so that the two inputs to the skip connection 426 have the same number of channels.

In cases where the first stack 412 or the second stack 414 of neural network layers includes a downsampling layer, e.g., the downsampling layer 412a, the unconditional discriminator block can include another downsampling layer 424 before the skip connection 426, so that the two inputs to the skip connection 426 have the same dimensionality.

In some implementations, one or more of the convolutional neural network layers in the unconditional discriminator block 400 are dilated convolutional layers.

The conditional discriminator block 450 is configured to receive a block input 452 and the conditioning text input 454 corresponding to the audio example and to generate a block output 456.

The conditional discriminator block 450 includes a first stack 462 of neural network layers that includes a downsampling layer 462a, an activation layer 462b, and a convolutional neural network layer 462c.

For conditional discriminator blocks that downsample the block input 452, the downsampling layer 462a downsamples the block input 452 by the corresponding downsampling factor. Although the conditional discriminator block 450 depicted in FIG. 4 has a single downsampling layer 462a, in general a conditional discriminator block can have any number of downsampling layers throughout the conditional discriminator block. In particular, the conditional discriminator block 450 downsamples the layer input 452 so that it has the same dimensionality in the time dimension as the conditioning text input 454.

In some implementations, the activation layer 462b can be a ReLU activation layer.

The convolutional neural network layer 462c processes a layer input that includes $N$ channels for each element and generates a layer output that includes $m \cdot N$ channels for each element; in this example $m=2$. In general any one or more of the convolutional layers of a conditional discriminator block can change the number of channels of the layer input.

The conditional discriminator block 450 includes a convolutional neural network layer 472 that processes the conditioning text input 454 and generates a layer output that includes $m \cdot N$ channels for each element. That is, the convolutional neural network layer 472 changes the number of channels of the conditioning text input (in this case, 567) to match the output of the convolutional neural network layer 462c in the first stack 462 of neural network layers.

The conditional discriminator block 450 includes a combining layer 474 that combines the output of the convolutional neural network layers 462c and 472, e.g., by addition or by concatenation.

The conditional discriminator block 450 includes a second stack 482 of neural network layers that processes the output of the combining layer 474. The second stack 482 of neural network layers includes an activation layer 482a and a convolutional neural network layer 482b.

The conditional discriminator block 450 includes a skip connection 496 that combines the input to the first stack 462 of neural network layers with the output of the second stack 482 of neural network layers. For example, the skip connection 496 can add or concatenate the input to the first stack 462 of neural network layers and the output of the second stack 482 of neural network layers.

In cases where the first stack 462 or the second stack 482 of neural network layers includes a convolutional neural network layer that changes the number of channels of the layer input, e.g., the convolutional neural network layer 462c, the conditional discriminator block 450 can include another convolutional neural network layer 492 before the skip connection 496, so that the two inputs to the skip connection 496 have the same number of channels.

In cases where the first stack 462 or the second stack 482 of neural network layers includes a downsampling layer, e.g., the downsampling layer 462a, the conditional discriminator block 450 can include another downsampling layer 494 before the skip connection 496, so that the two inputs to the skip connection 496 have the same dimensionality.

In some implementations, one or more of the convolutional neural network layers in the conditional discriminator block 450 are dilated convolutional layers.

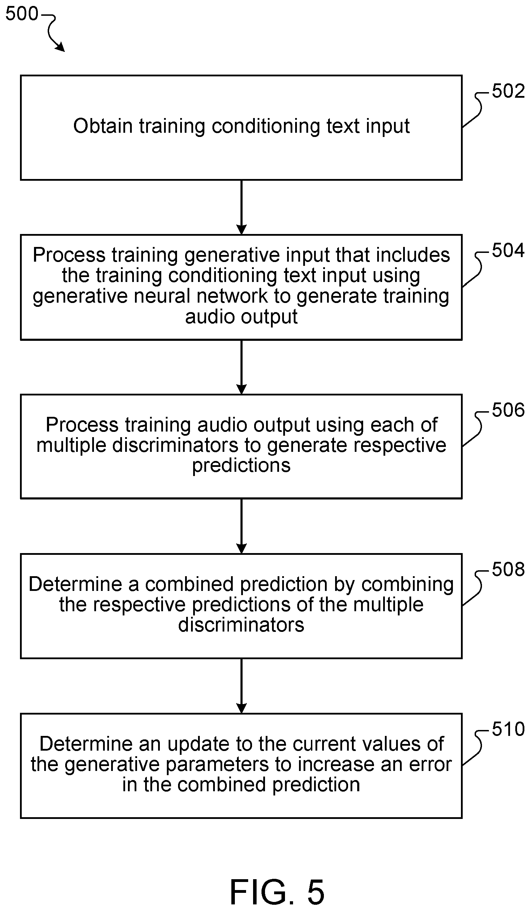

FIG. 5 is a flow diagram of an example process 500 for training a generative neural network. For convenience, the process 500 will be described as being performed by a system of one or more computers located in one or more locations. For example, a training system, e.g., the training system 100 depicted of FIG. 1, appropriately programmed in accordance with this specification, can perform the process 500.

The generative neural network has multiple generative parameters. The generative neural network can include a sequence of groups of convolutional neural network layers that each include one or more dilated convolutional neural network layers. One or more groups, or blocks, of the generative neural network can also include one or more upsampling layers to account for a ratio between the input time steps of the conditioning text inputs and the output time steps of the audio outputs.

The system obtains a training conditioning text input (step 502). The training conditioning text input can include a respective linguistic feature representation at each of multiple input time steps. For example, the linguistic feature representation at each input time step can include a phoneme, a duration, and a logarithmic fundamental frequency at the time step.

The system processes a training generative input that includes the training conditioning text input using the generative neural network to generate a training audio output (step 504). The system generates the training audio output in accordance with current values of the generative parameters of the generative neural network. The training audio output can include a respective audio sample at each of multiple output time steps.

The training generative input can also include a noise input. The generative neural network can include one or more conditional batch normalization neural network layers that are conditioned on a linear embedding of the noise input. In some implementations, each conditional batch normalization neural network layer is conditioned on a different linear embedding of the noise input.

In some implementations, the generative input includes an identification of a class to which the output wave should belong. In some such implementations, the conditional batch normalization neural network layers are further conditioned on the identification of the class.

In some implementations, the system zero-pads the training conditioning text input (i.e., adds one or more zeros to the end of the training conditioning text input) before providing the training conditioning text input to the generative neural network, so that each training conditioning text input has the same dimensionality. It can be more efficient for deep learning models to process fixed-size training examples in batches, as opposed to different-sized training examples sequentially.

However, because the generative neural network has multiple convolutional neural network layers, the convolutions can propagate non-zero values into the zero-padded elements, which leads to interference with the non-zero-padded elements in later convolutions. To avoid this, the system can apply a convolutional mask to the input of each convolutional neural network layer. The convolutional mask can be a zero-one mask, with 0s at the elements corresponding to zero-padded elements of the input and 1s at the elements corresponding to non-zero-padded elements of the input. Applying the convolutional mask ensures that the zero-padded elements of the input do not interfere with the non-zero-padded elements of the input. The zero-one mask can be upsampled at the same rate as the conditional input, so that the proper number of zero-padded elements are processed before each respective convolutional neural network layer. Before outputting the final audio example, the system can remove the zero-padded elements. By zero-padding and then applying a convolutional mask, the system is able to generate audio examples of arbitrary length.

The system processes the training audio output using each of multiple discriminators to generate respective predictions of whether the training audio output is real or synthetic (step 506).

In some implementations, the multiple discriminators include one or more conditional discriminators and one or more unconditional discriminators.

In some implementations, one or more of the multiple discriminators processes a different proper subset of the training audio output. In some such implementations, the size of the proper subset for a particular discriminator is predetermined. In some such implementations, each discriminator downsamples the proper subset by a predetermined downsampling factor that corresponds to the size of the proper subset. In some such implementations, each discriminator downsamples the proposer subset using strided convolution.

The system determines a combined prediction by combining the respective predictions of the multiple discriminators (step 508). For example, the system can determine an average of the predictions, or process the predictions using a voting algorithm.

The system determines an update to the current values of the generative parameters to increase an error in the combined prediction (step 510). In some implementations, the system can also determine an update to current values of discriminative parameters of the multiple discriminators to decrease the error in the combined prediction.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose

EP 4 018 383 B1

microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method of training a feedforward generative neural network (110) having a plurality of generative parameters and configured to generate output audio examples using conditioning text inputs,

   wherein each conditioning text input characterizes a respective input text at each of a plurality of input time steps, wherein the feedforward generative neural network (110) is configured to receive a generative input comprising a conditioning text input and to process the generative input to generate an audio output depicting speech corresponding to the input text **characterized by** the conditioning text input, the audio output comprising respective audio samples at each of a plurality of output time steps, and
   wherein the training comprises:

      obtaining (502) a training conditioning text input (102);
      processing (504) a training generative input comprising the training conditioning text input (102) using the feedforward generative neural network (110) in accordance with current values of the generative parameters to generate a training audio output (112);
      processing (506) the training audio output (112) using each of a plurality of discriminator neural networks, wherein:

         the plurality of discriminator neural networks comprises one or more conditional discriminators, wherein each conditional discriminator processes a respective subset of the training audio output (112) and the training conditioning text input (102) to generate a prediction of whether the training audio output (112) is a real audio example or a synthetic audio example, and
         the plurality of discriminator neural networks comprises one or more unconditional discriminators, wherein each unconditional discriminator processes a respective subset of the training audio output (112) but not the training conditioning text input (102) to generate a prediction of whether the training audio output (112) is a real audio example or a synthetic audio example;

      determining (508) a first combined prediction (122) by combining the respective predictions of the plurality of discriminator neural networks; and
      determining (510) an update to the current values of the generative parameters to increase a first error in the first combined prediction (122).

2. The method of claim 1, wherein:

   each discriminator has a plurality of respective discriminative parameters,
   each conditional discriminator processes the training audio output (112) and the training conditioning text input (102) in accordance with current values of the respective discriminative parameters,
   each unconditional discriminator processes the training audio output (112) but not the training conditioning text input (102) in accordance with current values of the respective discriminative parameters, and
   the method further comprises determining an update to the current values of the discriminative parameters to decrease the first error in the first combined prediction (122), and/or
   wherein the training further comprises:

      obtaining a real audio example and a real conditioning text input comprising a transcript of the real audio example;
      processing i) the real audio example and the real conditioning text input using each of the conditional discriminators and ii) the real audio example but not the real conditioning text input using each of the unconditional discriminators, wherein each discriminator generates a prediction of whether the real audio example is a real audio example or a synthetic audio example;

determining a second combined prediction by combining the respective predictions of the plurality of discriminator neural networks; and
determining an update to the current values of the discriminative parameters to decrease a second error in the second combined prediction, and/or
wherein the feedforward generative neural network (110) comprises a sequence of groups of convolutional neural network layers, wherein each group includes one or more dilated convolutional layers.

3. The method of claim 1 or 2, wherein each discriminator neural network comprises a sequence of groups of convolutional neural network layers, wherein each group includes one or more dilated convolutional layers, and/or

wherein the feedforward generative neural network (110) comprises a sequence of groups of convolutional neural network layers, wherein one or more groups include one or more respective upsampling layers to account for a first ratio between the input time steps of the conditioning text inputs and the output time steps of the audio outputs, and/or

wherein one or more groups of the sequence of groups of convolutional neural network layers of each discriminator neural network include one or more respective downsampling layers to account for a second ratio between the output time steps of the audio outputs and the input times steps of the conditioning text inputs, and/or wherein:

the feedforward generative neural network (110) comprises a sequence of groups of convolutional neural network layers,
the method further comprises zero-padding each training conditioning text input (102) to have a common dimensionality, and
the method further comprises processing a respective input to each convolutional neural network layer using a zero-one mask.

4. The method of any one of claims 1-3, wherein:

each respective subset of the training audio output (112) is a proper subset of the training audio output (112), and
at least two of the discriminators process different proper subsets of the training audio output (112).

5. The method of claim 4, wherein processing a respective proper subset of the training audio output (112) comprises, for each discriminator:

taking a random sample of the training audio output (112), wherein the random sample comprises a plurality of consecutive audio samples, wherein a size of the random sample for a given discriminator is predetermined; and
processing the random sample of the training audio output (112), preferably
wherein, for each conditional discriminator:

taking a random sample of the training audio output (112) comprises taking a random sample that corresponds to a sequence of consecutive input time steps, and
processing the training conditioning text input (102) comprises processing the training conditioning text input (102) at the sequence of consecutive input time steps.

6. The method of any one of claims 5, wherein processing the random sample of the training audio output (112) comprises, for each discriminator, downsampling the random sample of the training audio output (112) to generate a downsampled representation, wherein each discriminator downsamples the random sample by a predetermined downsampling factor, preferably
wherein:

the respective predetermined downsampling factor for each discriminator corresponds to the size of the random sample for the discriminator; and
each downsampled representation has a common dimensionality for all of the discriminators.

7. The method of claim 6, wherein downsampling the random sample of the training audio output (112) comprises processing the random sample of the training audio output (112) using a strided convolutional neural network layer.

8. The method of any one of claims 1-7, wherein each conditioning text input comprises a respective linguistic feature representation at each of the plurality of input time steps, and wherein the respective linguistic feature representation of the conditioning text input at each of the input time steps comprises one or more of: a phoneme, a duration, or a logarithmic fundamental frequency.

9. The method of any one of claims 1-8, wherein the generative input further comprises a noise input (104), preferably wherein the feedforward generative neural network (110) comprises one or more conditional batch normalization neural network layers that are conditioned on a linear embedding of the noise input (104).

10. The method of any one of claims 1-9, wherein the generative input further comprises an identification of a class (106) to which the audio output should belong.

11. A computer-implemented method for generating output audio examples using a feedforward generative neural network (110) that has been trained using the method of any one of claims 1-10, the method comprising:

    obtaining a conditioning text input characterizing an input text at each of a plurality of input time steps, and generating the output audio examples by processing a generative input comprising the conditioning text input using the feedforward generative neural network (110).

12. The method of claim 11, wherein obtaining a conditioning text input comprises receiving a generative input comprising i) a conditioning text input characterizing an input text at each of a plurality of input time steps, and ii) a noise input, wherein the feedforward generative neural network (110) is configured to receive the generative input and to process the generative input to generate an audio output that comprises respective audio samples at each of a plurality of output time steps, wherein:

    the feedforward generative neural network (110) comprises a sequence of groups of convolutional neural network layers;
    one or more groups include one or more respective upsampling layers to account for a first ratio between the input time steps of the conditioning text input and the output time steps of the audio output; and
    one or more groups include one or more conditional batch normalization neural network layers that are conditioned on a linear embedding of the noise input.

13. The method of claim 12, wherein:

    the method further comprises zero-padding each conditioning text input to have a common dimensionality, and the method further comprises processing a respective input to each convolutional neural network layer using a zero-one mask, and/or
    wherein each conditional batch normalization neural network layer is conditioned on a different linear embedding of the noise input, and/or
    wherein each group includes one or more dilated convolutional layers, and/or
    wherein the conditioning text input comprises a respective linguistic feature representation at each of the plurality of input time steps, and wherein the respective linguistic feature representations of the conditioning text input at each of the input time steps comprises one or more of: a phoneme, a duration, and a logarithmic fundamental frequency, and/or
    wherein the generative input further comprises an identification of a class (106) to which the audio output should belong.

14. A system comprising one or more computers and one or more storage devices storing instructions that when executed by the one or more computers cause the one or more computers to perform the method of any one of claims 1-13.

15. One or more non-transitory computer storage media storing instructions that when executed by one or more computers cause the one more computers to perform the operations of any one of claims 1-13.


**Patentansprüche**

1. Computerimplementiertes Verfahren zum Trainieren eines vorwärtsgerichteten generativen neuronalen Netzes (110), das eine Vielzahl von generativen Parametern aufweist und so konfiguriert ist, dass es Ausgabeaudiobeispiele unter Verwendung von konditionierenden Texteingaben erzeugt,

wobei jede konditionierende Texteingabe einen jeweiligen Eingabetext bei jedem einer Vielzahl von Eingabezeitschritten charakterisiert,

wobei das vorwärtsgerichtete generative neuronale Netz (110) so konfiguriert ist, dass es eine generative Eingabe empfängt, die eine konditionierende Texteingabe umfasst, und die generative Eingabe verarbeitet, um eine Audioausgabe zu erzeugen, die Sprache darstellt, die dem durch die konditionierende Texteingabe charakterisierten Eingabetext entspricht, wobei die Audioausgabe jeweilige Audioproben bei jedem einer Vielzahl von Ausgabezeitschritten umfasst, und

wobei das Trainieren Folgendes umfasst:

Erlangen (502) einer konditionierenden Trainingstexteingabe (102);

Verarbeiten (504) einer generativen Trainingseingabe, die die konditionierende Trainingstexteingabe (102) umfasst, unter Verwendung des vorwärtsgerichteten generativen neuronalen Netzes (110) gemäß aktuellen Werten der generativen Parameter, um eine Trainings-Audioausgabe (112) zu erzeugen;

Verarbeiten (506) der Trainings-Audioausgabe (112) unter Verwendung jedes einer Vielzahl von neuronalen Diskriminatornetzen, wobei:

die Vielzahl von neuronalen Diskriminatornetzen einen oder mehrere bedingte Diskriminatoren umfasst, wobei jeder bedingte Diskriminator eine jeweilige Teilmenge der Trainings-Audioausgabe (112) und der konditionierenden Trainingstexteingabe (102) verarbeitet, um eine Vorhersage dessen zu erzeugen, ob es sich bei der Trainings-Audioausgabe (112) um ein reales Audiobeispiel oder ein synthetisches Audiobeispiel handelt, und

die Vielzahl von neuronalen Diskriminatornetzen einen oder mehrere unbedingte Diskriminatoren umfasst, wobei jeder unbedingte Diskriminator eine jeweilige Teilmenge der Trainings-Audioausgabe (112), aber nicht der konditionierenden Trainingstexteingabe (102) verarbeitet, um eine Vorhersage dessen zu erzeugen, ob es sich bei der Trainings-Audioausgabe (112) um ein reales Audiobeispiel oder ein synthetisches Audiobeispiel handelt;

Bestimmen (508) einer ersten kombinierten Vorhersage (122) durch Kombinieren der jeweiligen Vorhersagen der Vielzahl von neuronalen Diskriminatornetzen; und

Bestimmen (510) einer Aktualisierung der aktuellen Werte der generativen Parameter, um einen ersten Fehler in der ersten kombinierten Vorhersage (122) zu erhöhen.

2. Verfahren nach Anspruch 1, wobei:

jeder Diskriminator eine Vielzahl von jeweiligen diskriminativen Parametern aufweist,

jeder bedingte Diskriminator die Trainings-Audioausgabe (112) und die konditionierende Trainingstexteingabe (102) gemäß aktuellen Werten der jeweiligen diskriminativen Parameter verarbeitet,

jeder unbedingte Diskriminator die Trainings-Audioausgabe (112), aber nicht die konditionierende Trainingstexteingabe (102) gemäß aktuellen Werten der jeweiligen diskriminativen Parameter verarbeitet, und

das Verfahren ferner Bestimmen einer Aktualisierung der aktuellen Werte der diskriminativen Parameter umfasst, um den ersten Fehler in der ersten kombinierten Vorhersage (122) zu verringern, und/oder

wobei das Trainieren ferner Folgendes umfasst:

Erlangen eines realen Audiobeispiels und einer realen konditionierenden Texteingabe, die ein Transkript des realen Audiobeispiels umfasst;

Verarbeiten i) des realen Audiobeispiels und der realen konditionierenden Texteingabe unter Verwendung jedes der bedingten Diskriminatoren und ii) des realen Audiobeispiels, aber nicht der realen konditionierenden Texteingabe unter Verwendung jedes der unbedingten Diskriminatoren, wobei jeder Diskriminator eine Vorhersage dessen erzeugt, ob es sich bei dem realen Audiobeispiel um ein reales Audiobeispiel oder ein synthetisches Audiobeispiel handelt;

Bestimmen einer zweiten kombinierten Vorhersage durch Kombinieren der jeweiligen Vorhersagen der Vielzahl von neuronalen Diskriminatornetzen; und

Bestimmen einer Aktualisierung der aktuellen Werte der diskriminativen Parameter, um einen zweiten Fehler in der zweiten kombinierten Vorhersage zu verringern, und/oder

wobei das vorwärtsgerichtete generative neuronale Netz (110) eine Folge von Gruppen von Faltungsschichten des neuronalen Netzes umfasst, wobei jede Gruppe eine oder mehrere dilatatierte Faltungsschichten beinhaltet.

3. Verfahren nach Anspruch 1 oder 2, wobei jedes neuronale Diskriminatornetz eine Folge von Gruppen von Faltungsschichten des neuronalen Netzes umfasst, wobei jede Gruppe eine oder mehrere dilatierte Faltungsschichten beinhaltet, und/oder

wobei das vorwärtsgerichtete generative neuronale Netz (110) eine Folge von Gruppen von Faltungsschichten des neuronalen Netzes umfasst, wobei eine oder mehrere Gruppen eine oder mehrere jeweilige Upsampling-Schichten beinhalten, um ein erstes Verhältnis zwischen den Eingabezeitschritten der konditionierenden Texteingaben und den Ausgabezeitschritten der Audioausgaben zu berücksichtigen, und/oder

wobei eine oder mehrere Gruppen der Folge von Gruppen von Faltungsschichten des neuronalen Netzes jedes neuronalen Diskriminatornetzes eine oder mehrere jeweilige Downsampling-Schichten beinhalten, um ein zweites Verhältnis zwischen den Ausgabezeitschritten der Audioausgaben und den Eingabezeitschritten der konditionierenden Texteingaben zu berücksichtigen, und/oder

wobei:

das vorwärtsgerichtete generative neuronale Netz (110) eine Folge von Gruppen von Faltungsschichten des neuronalen Netzes umfasst,

das Verfahren ferner Auffüllen jeder konditionierenden Trainingstexteingabe (102) mit Nullen umfasst, um eine gemeinsame Dimensionalität aufzuweisen, und

das Verfahren ferner Verarbeiten einer jeweiligen Eingabe in jede Faltungsschicht des neuronalen Netzes unter Verwendung einer Null-Eins-Maske umfasst.

4. Verfahren nach einem der Ansprüche 1-3, wobei:

jede jeweilige Teilmenge der Trainings-Audioausgabe (112) eine echte Teilmenge der Trainings-Audioausgabe (112) ist und

mindestens zwei der Diskriminatoren unterschiedliche echte Teilmengen der Trainings-Audioausgabe (112) verarbeiten.

5. Verfahren nach Anspruch 4, wobei das Verarbeiten einer jeweiligen echten Teilmenge der Trainings-Audioausgabe (112) für jeden Diskriminator Folgendes umfasst:

Entnehmen einer Zufallsstichprobe der Trainings-Audioausgabe (112), wobei die Zufallsstichprobe eine Vielzahl von aufeinanderfolgenden Audioproben umfasst, wobei die Größe der Zufallsstichprobe für einen gegebenen Diskriminator vorbestimmt ist; und

Verarbeiten der Zufallsstichprobe der Trainings-Audioausgabe (112), vorzugsweise

wobei für jeden bedingten Diskriminator:

das Entnehmen einer Zufallsstichprobe der Trainings-Audioausgabe (112) Entnehmen einer Zufallsstichprobe umfasst,

die einer Folge von aufeinanderfolgenden Eingabezeitschritten entspricht, und

das Verarbeiten der konditionierenden Trainingstexteingabe (102) Verarbeiten der konditionierenden Trainingstexteingabe (102) bei der Folge von aufeinanderfolgenden Eingabezeitschritten umfasst.

6. Verfahren nach einem der Ansprüche 5, wobei das Verarbeiten der Zufallsstichprobe der Trainings-Audioausgabe (112) für jeden Diskriminator Downsampeln der Zufallsstichprobe der Trainings-Audioausgabe (112) umfasst, um eine downgesampelte Darstellung zu erzeugen, wobei jeder Diskriminator die Zufallsstichprobe um einen vorbestimmten Downsampling-Faktor downsampelt, vorzugsweise wobei:

der jeweilige vorbestimmte Downsampling-Faktor für jeden Diskriminator der Größe der Zufallsstichprobe für den Diskriminator entspricht; und

jede downgesampelte Darstellung eine gemeinsame Dimensionalität für alle Diskriminatoren aufweist.

7. Verfahren nach Anspruch 6, wobei das Downsampeln der Zufallsstichprobe der Trainings-Audioausgabe (112) Verarbeiten der Zufallsstichprobe der Trainings-Audioausgabe (112) unter Verwendung einer gestuften Faltungsschicht des neuronalen Netzes umfasst.

8. Verfahren nach einem der Ansprüche 1-7, wobei jede konditionierende Texteingabe eine jeweilige linguistische Merkmalsdarstellung bei jedem der Vielzahl von Eingabezeitschritten umfasst und wobei die jeweilige linguistische Merkmalsdarstellung der konditionierenden Texteingabe bei jedem der Eingabezeitschritte eines oder mehrere von Folgenden umfasst: ein Phonem, eine Dauer oder eine logarithmische Grundfrequenz.

9. Verfahren nach einem der Ansprüche 1-8, wobei die generative Eingabe ferner eine Rauscheingabe (104) umfasst, vorzugsweise wobei das vorwärtsgerichtete generative neuronale Netz (110) eine oder mehrere Schichten des neuronalen Netzes mit bedingter Batch-Normalisierung umfasst, die von einer linearen Einbettung der Rauscheingabe (104) abhängen.

10. Verfahren nach einem der Ansprüche 1-9, wobei die generative Eingabe ferner eine Identifizierung einer Klasse (106) umfasst, zu der die Audioausgabe gehören sollte.

11. Computerimplementiertes Verfahren zum Erzeugen von Ausgabeaudiobeispielen unter Verwendung eines vorwärtsgerichteten generativen neuronalen Netzes (110), das unter Verwendung des Verfahrens nach einem der Ansprüche 1-10 trainiert wurde, wobei das Verfahren Folgendes umfasst:

Erlangen einer konditionierenden Texteingabe, die einen Eingabetext bei jedem einer Vielzahl von Eingabezeitschritten charakterisiert, und
Erzeugen der Ausgabeaudiobeispiele durch Verarbeiten einer generativen Eingabe, die die konditionierende Texteingabe umfasst, unter Verwendung des vorwärtsgerichteten generativen neuronalen Netzes (110).

12. Verfahren nach Anspruch 11, wobei das Erlangen einer konditionierenden Texteingabe Empfangen einer generativen Eingabe umfasst, die i) eine konditionierende Texteingabe, die einen Eingabetext bei jedem einer Vielzahl von Eingabezeitschritten charakterisiert, und ii) eine Rauscheingabe umfasst, wobei das vorwärtsgerichtete generative neuronale Netz (110) so konfiguriert ist, dass es die generative Eingabe empfängt und die generative Eingabe verarbeitet, um eine Audioausgabe zu erzeugen, die jeweilige Audioproben bei jedem einer Vielzahl von Ausgabezeitschritten umfasst, wobei:

das vorwärtsgerichtete generative neuronale Netz (110) eine Folge von Gruppen von Faltungsschichten des neuronalen Netzes umfasst;
eine oder mehrere Gruppen eine oder mehrere jeweilige Upsampling-Schichten beinhalten, um ein erstes Verhältnis zwischen den Eingabezeitschritten der konditionierenden Texteingabe und den Ausgabezeitschritten der Audioausgabe zu berücksichtigen; und
eine oder mehrere Gruppen eine oder mehrere Schichten des neuronalen Netzes mit bedingter Batch-Normalisierung beinhalten, die von einer linearen Einbettung der Rauscheingabe abhängen.

13. Verfahren nach Anspruch 12, wobei:

das Verfahren ferner Auffüllen jeder konditionierenden Texteingabe mit Nullen umfasst, um eine gemeinsame Dimensionalität aufzuweisen, und
das Verfahren ferner Verarbeiten einer jeweiligen Eingabe in jede Faltungsschicht des neuronalen Netzes unter Verwendung einer Null-Eins-Maske umfasst, und/oder
wobei jede Schicht des neuronalen Netzes mit bedingter Batch-Normalisierung von einer anderen linearen Einbettung der Rauscheingabe abhängt, und/oder
wobei jede Gruppe eine oder mehrere dilatierte Faltungsschichten beinhaltet, und/oder
wobei die konditionierende Texteingabe eine jeweilige linguistische Merkmalsdarstellung bei jedem der Vielzahl von Eingabezeitschritten umfasst, und wobei die jeweiligen linguistischen Merkmalsdarstellungen der konditionierenden Texteingabe bei jedem der Eingabezeitschritte eines oder mehrere von Folgenden umfasst: ein Phonem, eine Dauer und eine logarithmische Grundfrequenz, und/oder
wobei die generative Eingabe ferner eine Identifizierung einer Klasse (106) umfasst, zu der die Audioausgabe gehören sollte.

14. System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, das Verfahren nach einem der Ansprüche 1-13 durchzuführen.

15. Ein oder mehrere nichtflüchtige Computerspeichermedien, die Anweisungen speichern, die, wenn sie von einem oder mehreren Computern ausgeführt werden, den einen oder die mehreren Computer veranlassen, die Operationen nach einem der Ansprüche 1-13 durchzuführen.

## EP 4 018 383 B1

**Revendications**

1. Procédé mis en œuvre par ordinateur pour l'entraînement d'un réseau neuronal génératif à propagation directe (110) comportant une pluralité de paramètres génératifs et configuré pour générer des exemples audio de sortie à l'aide d'entrées de texte de conditionnement,

    dans lequel chaque entrée de texte de conditionnement caractérise un texte d'entrée respectif à chacune d'une pluralité d'étapes temporelles d'entrée,
    dans lequel le réseau neuronal génératif à propagation directe (110) est configuré pour recevoir une entrée générative comprenant une entrée de texte de conditionnement et pour traiter l'entrée générative pour générer une sortie audio représentant la parole correspondant au texte d'entrée **caractérisé par** l'entrée de texte de conditionnement, la sortie audio comprenant des échantillons audio respectifs à chacune d'une pluralité d'étapes temporelles de sortie, et
    dans lequel l'entraînement comprend :

       l'obtention (502) d'une entrée de texte de conditionnement d'entraînement (102) ;
       le traitement (504) d'une entrée générative d'entraînement comprenant l'entrée de texte de conditionnement d'entraînement (102) à l'aide du réseau neuronal génératif à propagation directe (110) selon les valeurs actuelles des paramètres génératifs pour générer une sortie audio d'entraînement (112) ;
       le traitement (506) de la sortie audio d'entraînement (112) à l'aide de chacun d'une pluralité de réseaux neuronaux discriminateurs, dans lequel :

          la pluralité de réseaux neuronaux discriminateurs comprend un ou plusieurs discriminateurs conditionnels, dans lequel chaque discriminateur conditionnel traite un sous-ensemble respectif de la sortie audio d'entraînement (112) et de l'entrée de texte de conditionnement d'entraînement (102) pour générer une prédiction selon laquelle la sortie audio d'entraînement (112) est un exemple audio réel ou un exemple audio synthétique, et
          la pluralité de réseaux neuronaux discriminateurs comprend un ou plusieurs discriminateurs inconditionnels, dans lequel chaque discriminateur inconditionnel traite un sous-ensemble respectif de la sortie audio d'entraînement (112) mais pas de l'entrée de texte de conditionnement d'entraînement (102) pour générer une prédiction selon laquelle la sortie audio d'entraînement (112) est un exemple audio réel ou un exemple audio synthétique ;
          la détermination (508) d'une première prédiction combinée (122) en combinant les prédictions respectives de la pluralité de réseaux neuronaux discriminateurs ; et
          la détermination (510) d'une mise à jour des valeurs actuelles des paramètres génératifs pour augmenter une première erreur dans la première prédiction combinée (122).

2. Procédé selon la revendication 1, dans lequel :

    chaque discriminateur a une pluralité de paramètres discriminatifs respectifs,
    chaque discriminateur conditionnel traite la sortie audio d'entraînement (112) et l'entrée de texte de conditionnement d'entraînement (102) selon les valeurs actuelles des paramètres discriminatifs respectifs,
    chaque discriminateur inconditionnel traite la sortie audio d'entraînement (112) mais pas l'entrée de texte de conditionnement d'entraînement (102) selon les valeurs actuelles des paramètres discriminatifs respectifs, et
    le procédé comprend également la détermination d'une mise à jour des valeurs actuelles des paramètres discriminatifs pour diminuer la première erreur dans la première prédiction combinée (122), et/ou
    dans lequel l'entraînement comprend également :

       l'obtention d'un exemple audio réel et d'une entrée de texte de conditionnement réelle comprenant une transcription de l'exemple audio réel ;
       le traitement i) de l'exemple audio réel et de l'entrée de texte de conditionnement réelle à l'aide de chacun des discriminateurs conditionnels et ii) de l'exemple audio réel mais pas de l'entrée de texte de conditionnement réelle à l'aide de chacun des discriminateurs inconditionnels, dans lequel chaque discriminateur génère une prédiction selon laquelle l'exemple audio réel est un exemple audio réel ou un exemple audio synthétique ;
       la détermination d'une seconde prédiction combinée en combinant les prédictions respectives de la pluralité de réseaux neuronaux discriminateurs ; et
       la détermination d'une mise à jour des valeurs actuelles des paramètres discriminatifs pour diminuer la seconde erreur dans la seconde prédiction combinée, et/ou

dans lequel le réseau neuronal génératif à propagation directe (110) comprend une séquence de groupes de couches de réseau neuronal convolutif, dans lequel chaque groupe comporte une ou plusieurs couches convolutives dilatées.

3. Procédé selon la revendication 1 ou 2, dans lequel chaque réseau neuronal discriminateur comprend une séquence de groupes de couches de réseau neuronal convolutif, dans lequel chaque groupe comporte une ou plusieurs couches convolutives dilatées, et/ou

dans lequel le réseau neuronal génératif à propagation directe (110) comprend une séquence de groupes de couches de réseau neuronal convolutif, dans lequel un ou plusieurs groupes comportent une ou plusieurs couches de suréchantillonnage respectives pour tenir compte d'un premier rapport entre les étapes temporelles d'entrée des entrées de texte de conditionnement et les étapes temporelles de sortie des sorties audio, et/ou dans lequel un ou plusieurs groupes de la séquence de groupes de couches de réseau neuronal convolutif de chaque réseau neuronal discriminateur comportent une ou plusieurs couches de sous-échantillonnage respectives pour tenir compte d'un second rapport entre les étapes temporelles de sortie des sorties audio et les étapes temporelles d'entrée des entrées de texte de conditionnement, et/ou dans lequel :

le réseau neuronal génératif à propagation directe (110) comprend une séquence de groupes de couches de réseau neuronal convolutif, le procédé comprend également le remplissage de zéros de chaque entrée de texte de conditionnement d'entraînement (102) afin d'avoir une dimensionnalité commune, et le procédé comprend également le traitement d'une entrée respective pour chaque couche de réseau neuronal convolutif à l'aide d'un masque binaire.

4. Procédé selon l'une quelconque des revendications 1 à 3, dans lequel :

chaque sous-ensemble respectif de la sortie audio d'entraînement (112) est un sous-ensemble propre de la sortie audio d'entraînement (112), et au moins deux des discriminateurs traitent différents sous-ensembles propres de la sortie audio d'entraînement (112).

5. Procédé selon la revendication 4, dans lequel le traitement d'un sous-ensemble propre respectif de la sortie audio d'entraînement (112) comprend, pour chaque discriminateur :

le prélèvement d'un échantillon aléatoire de la sortie audio d'entraînement (112), dans lequel l'échantillon aléatoire comprend une pluralité d'échantillons audio consécutifs, dans lequel la taille de l'échantillon aléatoire pour un discriminateur donné est prédéterminée ; et le traitement de l'échantillon aléatoire de la sortie audio d'entraînement (112), de préférence dans lequel, pour chaque discriminateur conditionnel :

le prélèvement d'un échantillon aléatoire de la sortie audio d'entraînement (112) comprend le prélèvement d'un échantillon aléatoire correspondant à une séquence d'étapes temporelles d'entrée consécutives, et le traitement de l'entrée de texte de conditionnement d'entraînement (102) comprend le traitement de l'entrée de texte de conditionnement d'entraînement (102) à la séquence d'étapes temporelles d'entrée consécutives.

6. Procédé selon l'une quelconque des revendications 5, dans lequel le traitement de l'échantillon aléatoire de la sortie audio d'entraînement (112) comprend, pour chaque discriminateur, le sous-échantillonnage de l'échantillon aléatoire de la sortie audio d'entraînement (112) afin de générer une représentation sous-échantillonnée, dans lequel chaque discriminateur sous-échantillonne l'échantillon aléatoire par un facteur de sous-échantillonnage prédéterminé, de préférence dans lequel :

le facteur de sous-échantillonnage prédéterminé respectif pour chaque discriminateur correspond à la taille de l'échantillon aléatoire pour le discriminateur ; et chaque représentation sous-échantillonnée a une dimensionnalité commune pour tous les discriminateurs.

**7.** Procédé selon la revendication 6, dans lequel le sous-échantillonnage de l'échantillon aléatoire de la sortie audio d'entraînement (112) comprend le traitement de l'échantillon aléatoire de la sortie audio d'entraînement (112) à l'aide d'une couche de réseau neuronal convolutif progressive.

**8.** Procédé selon l'une quelconque des revendications 1 à 7, dans lequel chaque entrée de texte de conditionnement comprend une représentation de caractéristique linguistique respective à chacune de la pluralité d'étapes temporelles d'entrée, et dans lequel la représentation de caractéristique linguistique respective de l'entrée de texte de conditionnement à chacune des étapes temporelles d'entrée comprend l'un ou plusieurs d'un phonème, d'une durée ou d'une fréquence fondamentale logarithmique.

**9.** Procédé selon l'une quelconque des revendications 1 à 8, dans lequel l'entrée générative comprend également une entrée de bruit (104), de préférence
dans lequel le réseau neuronal génératif à propagation directe (110) comprend une ou plusieurs couches de réseau neuronal de normalisation par lots conditionnelles qui sont conditionnées par un plongement linéaire de l'entrée de bruit (104).

**10.** Procédé selon l'une quelconque des revendications 1 à 9, dans lequel l'entrée générative comprend également une identification d'une classe (106) à laquelle la sortie audio doit appartenir.

**11.** Procédé mis en œuvre par ordinateur de génération d'exemples audio de sortie à l'aide d'un réseau neuronal génératif à propagation directe (110) entraîné à l'aide du procédé selon l'une quelconque des revendications 1 à 10, le procédé comprenant :

l'obtention d'une entrée de texte de conditionnement caractérisant un texte d'entrée à chacune d'une pluralité d'étapes temporelles d'entrée, et
la génération des exemples audio de sortie en traitant une entrée générative comprenant l'entrée de texte de conditionnement à l'aide du réseau neuronal génératif à propagation directe (110).

**12.** Procédé selon la revendication 11, dans lequel l'obtention d'une entrée de texte de conditionnement comprend la réception d'une entrée générative comprenant i) une entrée de texte de conditionnement caractérisant un texte d'entrée à chacune d'une pluralité d'étapes temporelles d'entrée, et ii) une entrée de bruit, dans lequel le réseau neuronal génératif à propagation directe (110) est configuré pour recevoir l'entrée générative et pour traiter l'entrée générative afin de générer une sortie audio qui comprend des échantillons audio respectifs à chacune d'une pluralité d'étapes temporelles de sortie, dans lequel :

le réseau neuronal génératif à propagation directe (110) comprend une séquence de groupes de couches de réseau neuronal convolutif ;
un ou plusieurs groupes comportent une ou plusieurs couches de suréchantillonnage respectives pour tenir compte d'un premier rapport entre les étapes temporelles d'entrée des entrées de texte de conditionnement et les étapes temporelles de sortie des sorties audio ; et
un ou plusieurs groupes comportent une ou plusieurs couches de réseau neuronal de normalisation par lots conditionnelles qui sont conditionnées par un plongement linéaire de l'entrée de bruit.

**13.** Procédé selon la revendication 12, dans lequel :

le procédé comprend également le remplissage de zéros de chaque entrée de texte de conditionnement afin d'avoir une dimensionnalité commune, et
le procédé comprend également le traitement d'une entrée respective pour chaque couche de réseau neuronal convolutif à l'aide d'un masque binaire, et/ou
dans lequel chaque couche de réseau neuronal à normalisation par lots conditionnelle est conditionnée par un plongement linéaire différent de l'entrée de bruit, et/ou
dans lequel chaque groupe comporte une ou plusieurs couches convolutionnelles dilatées, et/ou
dans lequel l'entrée de texte de conditionnement comprend une représentation de caractéristique linguistique respective à chacune de la pluralité d'étapes temporelles d'entrée, et dans lequel les représentations de caractéristique linguistique respectives de l'entrée de texte de conditionnement à chacune des étapes temporelles d'entrée comprend l'un ou plusieurs d'un phonème, d'une durée ou d'une fréquence fondamentale logarithmique, et/ou
dans lequel l'entrée générative comprend également une identification d'une classe (106) à laquelle la sortie audio doit appartenir.

14. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser le procédé selon l'une quelconque des revendications 1 à 13.

15. Un ou plusieurs supports de stockage informatique non transitoires stockant des instructions qui, lorsqu'elles sont exécutées par un ou plusieurs ordinateurs, amènent les un ou plusieurs ordinateurs à réaliser les opérations selon l'une quelconque des revendications 1 à 13.

REAL AUDIO SAMPLE
108

CONDITIONING
TEXT INPUT 102

NOISE INPUT 104

CLASS 106

GENERATIVE
NEURAL NETWORK
110

AUDIO
OUTPUT
112

DISCRIMINATOR
NEURAL NETWORK
SYSTEM 120

PREDICTION
122

PARAMETER
UPDATING
SYSTEM 130

PARAMETER UPDATE
132

TRAINING SYSTEM 100

FIG. 1

BLOCK OUTPUT 206

FIG. 2

Generator Block 200

Discriminator Neural Network System 300

FIG. 3

Conditional Discriminator Block 450

BLOCK OUTPUT 456

Conv channels: 567→2 x N, size: 1  472

l  454

Conv dialation: 2, size: 3  b
ReLU  a

Conv channels: N→2 x N, size: 3  c
ReLU  b
Downsample  a

h  452

474

Downsample  494
Conv channels: N→2 x N, size: 1  492

496

482

462

Unconditional Discriminator Block 400

BLOCK OUTPUT 404

Conv dialation: 2, size: 3  b
ReLU  a

Conv channels: N→m x N, size: 3  c
ReLU  b
Downsample  a

h  402

Downsample  424
Conv channels: N→m x N, size: 1  422

426

414

412

FIG. 4

500

| Obtain training conditioning text input | 502 |

| Process training generative input that includes the training conditioning text input using generative neural network to generate training audio output | 504 |

| Process training audio output using each of multiple discriminators to generate respective predictions | 506 |

| Determine a combined prediction by combining the respective predictions of the multiple discriminators | 508 |

| Determine an update to the current values of the generative parameters to increase an error in the combined prediction | 510 |

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. GUO et al.** A New GAN-based End-to-End TTS Training Algorithm. *arXiv:1904.04775*, 2019